# EUROPEAN PATENT SPECIFICATION

(11) **EP 0 888 962 B1**
(45) Date of publication and mention of the grant of the patent: **03.09.2003**
(21) Application number: 98305248.1
(22) Date of filing: 01.07.1998
(51) Int. Cl.: B63H 5/125, B63H 25/42, B63B 17/00

(54) **Propulsion unit**
Antriebseinheit
Ensemble de propulsion

(30) Priority: 04.07.1997 FI 972855
(43) Date of publication of application: 07.01.1999
(73) Proprietor: ABB Oy, 00380 Helsinki (FI)
(72) Inventor: Palokangas, Martti, 02170 Espoo (FI); Nyman, Rurik, 01620 Vantaa (FI); Laukia, Kari, 02660 Espoo (FI)
(74) Representative: Hjelt, Dag Silvio Hjalmar Andrea

(56) References cited:
- FR-A- 2 338 842
- FR-A- 2 560 147
- GB-A- 2 180 810
- US-A- 1 845 712

## Description

This invention relates to a propulsion and steering arrangement for a ship or other marine vessel, the arrangement being of the kind according to the preamble of claim 1. The invention also relates to a marine vessel provided with a propulsion and steering arrangement.

Propulsion and steering arrangements of the kind referred to are known for example from CA-A-1,311,657 and US-A-5,403,216. Certain parts of such known propulsion and steering arrangements are subject to wear and periodically need to be maintained or replaced. Typically such parts may comprise rotation means and bearing means and a sealing system protecting these parts. When such a known propulsion and steering arrangement is installed in a ship, there is practically no access to these parts for maintenance or replacement, so that the ship has to be docked or the propulsion unit removed from the ship to enable essential maintenance to be effected. These measures are both time-consuming and costly to perform.

An aim of the present invention is to provide a propulsion and steering arrangement for a marine vessel which avoids the above mentioned disadvantages and which can be maintained reliably and relatively simply.

According to one aspect of the present invention there is provided a propulsion and steering arrangement for a ship or other marine vessel, the arrangement being as claimed in the ensuing claim 1.

The present invention is based on the idea of providing a temporarily usable support for the propulsion unit of the propulsion and steering arrangement which allows parts needing to be serviced, i.e. the rotation means, bearing means and/or sealing system, to be accessed without having to disassemble the propulsion unit installation. This is simply achieved by arranging for the propulsion unit to be vertically lowered into its supported inoperative position in which the parts to be serviced or replaced are released from their operating positions. Thus, the necessary maintenance, repair or replacement of parts can be carried out from inside the ship without the need for the ship to dock for removal of the propulsion unit. Furthermore, the support arrangement allows the propulsion unit to be temporarily installed in a new ship being built in its inoperative position and for the partly built ship then to be launched. The upper structure of the propulsion and steering arrangement can then be installed in place after launch of the ship.

Conveniently the supporting means comprises cooperating means arranged on the propulsion unit, i.e. the arm means or the propeller pod, and the hull of the ship, respectively. In this case the cooperating means suitably comprise first fastening means, for example fastening hooks or the like, arranged on the hull, second fastening means, e.g. hooks, provided on the arm means and/or the propeller pod and suspension means, for example wire means or the like, between the first and second fastening means. With such an arrangement it is not necessary to arrange any supplementary structures in the installation gap between the propulsion unit and the hull of the ship.

Alternatively cooperating means are provided, respectively, on the arm means and the hull of the marine vessel in the region of the annular gap. In this case the cooperating means may comprise at lest one support surface on one of the said turnable arm means and the hull of the ship and at least one support means on the other said turnable arm means and the hull of the ship. A particular advantage of this construction is that the support arrangement is always in place ready for use.

In order to eliminate harmful effects and to prevent possible unintentional engagement of the support surface and the support means, which may occur for example when the propulsion unit swings or moves in the annular gap between the propulsion unit and the hull of the marine vessel, the support means may be provided with movable means, for example a rotating sleeve or the like.

The support means may preferably be arranged so as to be movable, e.g. radially moveable, whereby when in first positions they may occupy positions in the gap for receiving the support surface and when in second positions they may be radially moved away from the gap. Alternatively the support means may be removable, whereby they are completely removed from their receiving positions. In this case, the openings left in the hull of the marine vessel or the arm means of the propulsion unit on removal of the support means can be closed when necessary with plugs for normal operation.

The supporting means is preferably arranged above the construction water line of the marine vessel whereby water is hindered from penetrating into the structure. In the case where the water rises above the supporting means, it is preferable that another sealing system is also provided designed permanently or temporarily to close the annular gap from below.

Embodiments of the invention will now be described in more detail, by way of example only, with particular reference to the accompanying drawings, in which:
Figure 1 schematically shows a preferred embodiment of a propulsion and steering arrangement according to the invention mounted to a hull of a ship; and
Figure 2 shows in cross-section and on an enlarged scale a detail of the arrangement shown in Figure 1.

In the drawings reference numeral 1 represents the hull of a ship and reference numeral 2 represents a rotatable arm of a propulsion unit. The lower end of the arm 2 is connected to a propeller pod 14 having propulsion propeller means 15. At the upper end of the rotatable arm 2, there is a rotation means 3, a rotary bearing 4 and a sealing system 5 protecting these parts and which together provide a propulsion and steering arrangement. Supporting bolts 6 connect the upper end of the arm 2 to the rotation means 3. Operation of the rotation means causes the arm 2, journalled in the bearing 4, to turn about a generally vertical axis thereby turning the propeller pod 14 relative to the hull 1. When the propulsion unit is fixedly installed as shown with the bolts 6 connecting the rotatable arm 2 to the rotation means 3, the parts of the propulsion unit requiring maintenance or replacement, such as the rotation means, the rotary bearing and the sealing system, are not readily accessible from inside the ship.

The ship according to the invention provides a solution to this problem by allowing the rotatable arm 2 of the propulsion unit to be detached from the rotation means 3 whilst remaining supported from the hull 1. In one arrangement, this is achieved by providing the rotatable arm 2 of the propulsion unit with a support surface 7 and by providing the hull 1 with support means 8 onto which the support surface can be vertically lowered to support the weight of the arm 2 and the propeller pod 14. The support surface 7 and the support means 8 are arranged in a generally annular gap 9 between a cylindrical part of the rotatable arm 2 and a confronting cylindrical surface of the hull 1 of the ship below the sealing system 5. Conveniently, the support surface comprises the downwardly facing surface of at least one circumferentially extending abutment 7 arranged on the rotatable arm and the support means 8 comprise radially inwardly projecting pins arranged in the hull of the ship. The at least one abutment may comprise an integral annular ring or may be segmented and the number of pins is chosen according to need.

The width of the annular gap 9 between the propulsion unit 2 and the hull 1 of the ship mainly depends on the size of the propulsion unit. When the propulsion unit is fixedly installed in the hull of the ship by means of the supporting bolts 6, the vertical distance a between the support surface 7 and the support means 8 below it is preferably from about 2 to 20 mm depending on the size of the propulsion unit. When the supporting bolts 6 are loosened, the propulsion unit provided with the support ring defining the support arm 7 can be lowered so as to rest on the pins defining the support means 8. When the rotatable arm 2 is supported in this manner, the rotation means 3, the rotation bearing 4 and the sealing system 5 are released from their operating positions and can be serviced or replaced as required. After servicing and/or repair, the propulsion unit can easily be raised and fixedly installed in its normal operating position by re-tightening the supporting bolts 6. In order to provide sufficient freedom of movement, a radial gap b is provided between the pins defining the support means 8 and the rotatable arm 2. This gap b is typically from about 2 to 20 mm, depending on the size of the propulsion unit, but may in some cases, be even larger.

The pins may be arranged to be movable radially inwards and outwards so that they can be moved radially away from their supporting position, e.g. so as not to be positioned in the gap between the rotatable arm and the hull of the ship, when the propulsion unit is in its operating position. Alternatively, the pins may be removable, whereby the openings they leave may be closed when necessary for example by means of plugs or the like.

The pins may be provided with moving means, for example with a rotating sleeve, in order to avoid engagement of the support ring and pins on unintentional contact.

It will be appreciated that the supporting bolts 6 will conveniently remain screw-threadedly attached to the arm 2 when the propulsion unit is in both its raised and lowered positions. The propulsion unit is moved upwardly from its lowered position by tightening the bolts 6 and is moved downwardly from its raised position by loosening the bolts 6.

Naturally the support arrangement described above may be inverted, whereby the support surface comprises the upwardly facing surface of at least one circumferentially extending abutment arranged on the hull of the ship and the support means comprises radially outwardly extending pins on the rotatable arm.

The support arrangement is preferably arranged to be above the construction water level so that water is hindered from penetrating into the structures of the ship when the propulsion unit is lowered into its lowered support position. To achieve additional protection, or in case the water level is above the support arrangement, the annular gap 9 may be closed temporarily from below by another sealing system 10. This additional sealing system may, for example, comprise a bellows sealing device which can be activated when the propulsion unit is lowered into its lowered support position for repair/maintenance, whereby any water present can then be removed from above the sealing system. The gap may alternatively be permanently closed, for example by means of a rotary seal.

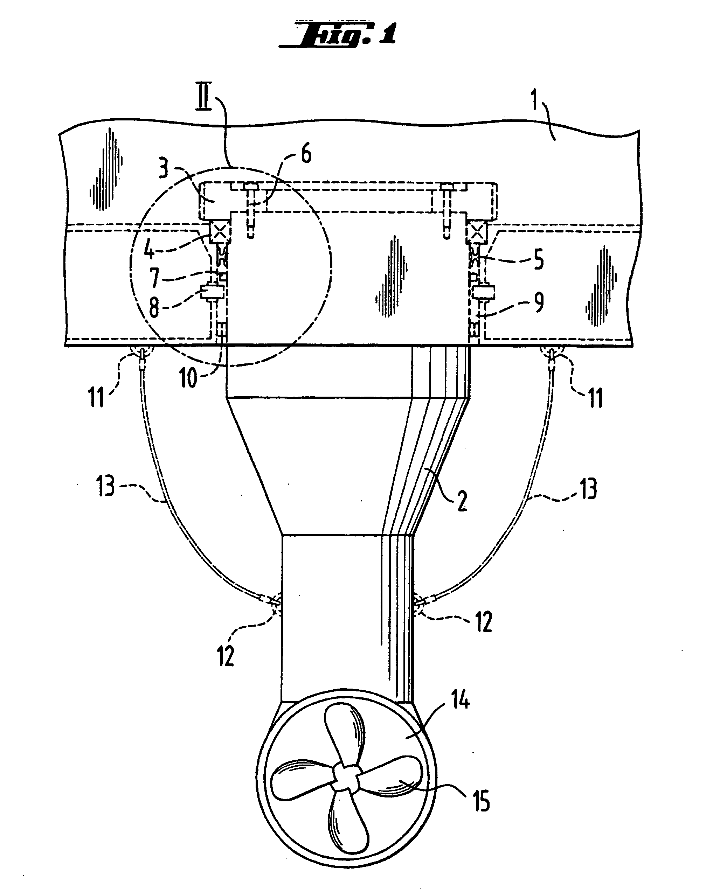

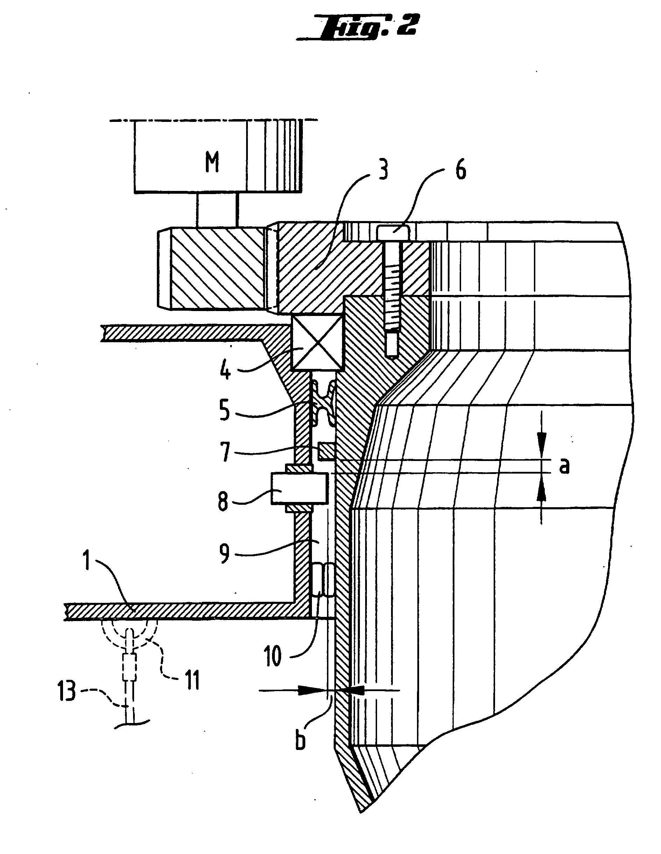

Figures 1 and 2 illustrate in broken lines an alternative support management comprising fastening hooks 11 and 12 or the like arranged, respectively, on the hull 1 of the ship and the rotation arm 2, and flexible elongate connecting means such as wire means 13, connected between the hooks 11 and 12. The lengths of the wire means can be adjusted in a manner known per se. Additional fastening hooks (not shown) may, for example, be fastened to the propeller pod 14, in which case additional wire means (not shown) or the like are provided for connection between the hull 1 and the propeller pod.

The drawings and the related description are only intended for clarifying the basic concept of the invention.

The propulsion and steering arrangement according to the invention is not limited to the embodiments disclosed, but several variations thereof are feasible within the scope of the ensuing claims.

## Claims

1. A propulsion and steering arrangement for a marine vessel having a hull (1), the arrangement comprising a propulsion unit turnable about a substantially vertical axis and having a propeller pod (14) provided with propeller means (15) and arm means (2) for connection between the propeller pod (14) and the hull (1), bearing means (4) for journalling the upper end of the arm means (2) to the hull, and rotation means (3) for turning the arm means (2) about said vertical axis, **characterised in that** the arrangement further comprises a sealing system (5) which, when the propulsion unit is mounted to the hull, is arranged in an annular gap (9) between the arm means (2) and the hull (1) for protecting said rotation means (3) and said bearing means (4), and **in that** the arrangement comprises supporting means (7,8; 11,12,13) for supporting the propulsion unit from the hull (1) when the propulsion means is vertically lowered from an operative position to an inoperative position in which the rotation means (5), bearing means (4) and/or the sealing system (5) can be serviced from the inside of the marine vessel.

2. An arrangement according to claim 1, further comprising securing means (6), e.g. bolt means, for releasably securing the arm means (2) to the rotation means (3) when the arm means is in its operative position, the securing means (6) being releasable to enable the propulsion unit to move out of its operative position into its inoperative position.

3. An arrangement according to claim 1 or 2, wherein the supporting means comprises cooperating means (7,8,11,12,13) provided on the propulsion unit and the hull (1), respectively.

4. An arrangement according to claim 3, wherein said cooperating means comprise first fastening means (11) for provision on the hull (1), second fastening means (12) provided on the arm means (2) and/or the propeller pod and suspension means (13) connected between the first and second fastening means (11 and 12).

5. An arrangement according to claim 3, wherein said cooperating means (7,8) are provided on the arm means (2) and the hull (1) of the marine vessel in the region of said annular gap (9).

6. An arrangement according to claim 5, wherein the cooperating means comprise a support surface (7) provided on one of said turnable arm means (2) and the hull (1) of the marine vessel and support means (8) provided on the other of said turnable arm means (2) and the hull of the marine vessel for receiving the support surface (7) when the propulsion unit is in its lowered inoperative position.

7. An arrangement according to claim 6, wherein the support means (8) is movable.

8. An arrangement according to claim 6, wherein the support means (8) is removable.

9. An arrangement according to any one of claims 6 to 8, wherein the support means (8) is provided with moving means.

10. An arrangement according to any one of the preceding claims, wherein the supporting means (7,8) is above the construction water line.

11. An arrangement according to any one of the preceding claims, wherein a further sealing system (10) is provided for closing said annular gap (9) from below permanently or temporarily.

12. A marine vessel having a hull and provided with a propulsion and steering arrangement according to any one of the preceding claims.

## Patentansprüche

1. Antriebs- und Steueranordnung für ein marines Fahrzeug, das einen Rumpf (1) besitzt, wobei die Anordnung eine Antriebseinheit besitzt, die um eine im Wesentlichen vertikale Achse drehbar ist und ein mit einem Propeller (15) ausgestattetes Propellergehäuse (14) besitzt, und eine Armeinrichtung (2) zur Verbindung zwischen dem Propellergehäuse (14) und dem Rumpf (1), eine Lagereinrichtung (4) zum drehbaren Lagern des oberen Endes der Armeinrichtung (2) an dem Rumpf, und eine Rotationseinrichtung (3) zum Drehen der Armeinrichtung (2) um die vertikale Achse besitzt, **dadurch gekennzeichnet, dass** die Anordnung ferner ein Abdichtungssystem (5) aufweist, das wenn die Antriebseinheit an dem Rumpf montiert ist, in einem ringförmigen Spalt (9) zwischen der Armeinrichtung (2) und dem Rumpf (1) montiert ist zum Schützen der Rotationseinrichtung (3) und der Lagereinrichtung (4), und dass die Anordnung eine Trageinrichtung (7, 8; 11, 12, 13) aufweist zum Tragen der Antriebseinheit an dem Rumpf (1), wenn die Antriebseinheit von einer betrieblichen Position in eine nichtbetriebliche Position abgesenkt ist, in der die Rotationseinrichtung (5), die Lageeinrichtung (4) und/oder das Abdichtungssystem (5) von innerhalb des marinen Fahrzeugs gewartet werden können.

2. Anordnung nach Anspruch 1, ferner mit einer Anbringeinrichtung (6), beispielsweise einer Bolzeneinrichtung, zum lösbaren Anbringen der Armeinrichtung (2) an der Rotationseinrichtung (3), wenn die Armeinrichtung in ihrer betrieblichen Position ist, wobei die Anbringeinrichtung (6) lösbar ist, um es der Antriebseinheit zu ermöglichen, sich aus ihrer betrieblichen Position in ihre nichtbetriebliche Position zu bewegen.

3. Anordnung nach Anspruch 1 oder 2, wobei die Trageinrichtung eine zusammenwirkende Einrichtung (7, 8, 11, 12, 13) aufweist, die an der Antriebseinheit bzw. dem Rumpf (1) vorgesehen ist.

4. Anordnung nach Anspruch 3, worin die zusammenwirkende Einrichtung eine erste Befestigungseinrichtung (11) zum Vorsehen an dem Rumpf (1), eine zweite Befestigungseinrichtung (12), die an der Armeinrichtung (2) und/oder dem Propellergehäuse vorgesehen ist, und eine Abhängeinrichtung (13), die zwischen der ersten und der zweiten Befestigungseinrichtung (11 und 12) verbunden ist, aufweist.

5. Anordnung nach Anspruch 3, wobei die zusammenwirkende Einrichtung (7, 8) an der Armeinrichtung (2) und dem Rumpf (1) des marinen Fahrzeugs in der Region des ringförmigen Spalts (9) vorgesehen ist.

6. Anordnung nach Anspruch 3, worin die zusammenwirkende Einrichtung eine an der drehbaren Armeinrichtung (2) oder dem Rumpf (1) des marinen Fahrzeugs vorgesehene Tragfläche (7) und eine an dem anderen der drehbaren Armeinrichtung (2) und dem Rumpf des marinen Fahrzeugs vorgesehenen Trageinrichtung (8) zum Empfangen der Tragfläche (7), wenn die Antriebseinheit in ihrer abgesenkten, nichtbetrieblichen Position ist, aufweist.

7. Anordnung nach Anspruch 6, worin die Trageinrichtung (8) bewegbar ist.

8. Anordnung nach Anspruch 6, wobei die Trageinrichtung (8) entnehmbar ist.

9. Anordnung nach einem der Ansprüche 6 bis 8, wobei die Trageinrichtung mit einer Bewegungseinrichtung ausgestattet ist.

10. Anordnung nach einem der vorhergehenden Ansprüche, wobei die Trageinrichtung (7, 8) oberhalb der Konstruktionswasserlinie ist.

11. Anordnung nach einem der vorhergehenden Ansprüche, wobei ein weiteres Abdichtungssystem (10) zum dauerhaften oder vorübergehenden Verschließen des ringförmigen Spalts (9) von unten vorgesehen ist.

12. Marines Fahrzeug, das einen Rumpf besitzt und mit einer Antriebs- und Steueranordnung nach einem der vorhergehenden Ansprüche ausgestattet ist.

## Revendications

1. Ensemble de propulsion et de direction pour un vaisseau marin comportant une coque (1), l'ensemble comprenant une unité de propulsion apte à tourner autour d'un axe sensiblement vertical et comportant une coque d'hélice (14) présentant un moyen formant hélice (15) et un moyen formant bras (2) pour la connexion entre la coque d'hélice (14) et la coque (1), un moyen de support (4) pour monter d'une manière tourillonnnante l'extrémité supérieure du moyen formant bras (2) sur la coque, et un moyen de rotation (3) pour faire tourner le moyen formant bras (2) autour dudit axe vertical, **caractérisé en ce que** l'agencement comprend en outre un système d'étanchéité (5) qui, lorsque l'unité de propulsion est montée sur la coque, est agencée dans un espace annulaire (9) entre le moyen formant bras (2) et la coque (1) pour protéger ledit moyen de rotation (3) et ledit moyen de palier (4), et **en ce que** l'ensemble comprend des moyens de support (7, 8; 11, 12, 13) pour supporter l'unité de propulsion de la coque (1) lorsque le moyen de propulsion est abaissé verticalement d'une position fonctionnelle à une position non fonctionnelle où le moyen de rotation (3), le moyen de palier (4) et/ou le système d'étanchéité (5) peuvent être entretenus depuis l'intérieur du vaisseau marin.

2. Ensemble selon la revendication 1, comprenant en outre des moyens de fixation (6), par exemple des moyens formant boulon, pour fixer relâchablement le moyen formant bras (2) au moyen de rotation (3) lorsque le moyen formant bras (2) se trouve dans sa position fonctionnelle, le moyen de fixation (6) étant relâchable pour permettre à l'unité de propulsion de sortir de sa position fonctionnelle dans sa position non fonctionnelle.

3. Ensemble selon la revendication 1 ou 2, où les moyens de support comprennent des moyens coopérants (7, 8, 11, 12, 13) prévus sur l'unité de propulsion et la coque (1), respectivement.

4. Ensemble selon la revendication 3, où lesdits moyens de coopération comprennent des premiers moyens de fixation (11) prévus sur la coque (1), des seconds moyens de fixation (12) prévus sur le moyen formant bras (2) et/ou la coque d'hélice et des moyens de suspension (13) reliés entre les premier et second moyens de fixation (11, 12).

5. Ensemble selon la revendication 3, où lesdits moyens coopérants (7, 8) sont prévus sur le moyen formant bras (2) et la coque (1) du vaisseau marin dans la région dudit espace annulaire (9).

6. Ensemble selon la revendication 5, où les moyens coopérants comprennent une surface de support (7) réalisée sur l'un parmi ledit moyen formant bras tournant (2) et la coque (1) du vaisseau marin, et des moyens de support (8) prévus sur l'autre parmi ledit moyen formant bras tournant (2) et la coque du vaisseau marin pour recevoir la surface de support (7) lorsque l'unité de propulsion se trouve dans sa position non fonctionnelle abaissée.

7. Ensemble selon la revendication 6, où les moyens de support (8) sont déplaçables.

8. Ensemble selon la revendication 6, où les moyens de support (8) sont amovibles.

9. Ensemble selon l'une des revendications 6 à 8, où les moyens de support (8) présentent un moyen mobile.

10. Ensemble selon l'une des revendications précédentes, où les moyens de support (7, 8) se situent au-dessus de la ligne de flottaison de construction.

11. Ensemble selon l'une des revendications précédentes, où en outre un système d'étanchéité (10) est prévu pour fermer ledit espace annulaire (9) depuis en dessous d'une manière permanente ou temporaire.

12. Vaisseau marin comportant une coque et présentant un ensemble de propulsion et de direction selon l'une des revendications précédentes.
